# EUROPÄISCHE PATENTANMELDUNG

(11) **EP 0 717 005 A1**
(43) Veröffentlichungstag der Anmeldung: **19.06.1996**
(21) Anmeldenummer: 95119746.6
(22) Anmeldetag: 14.12.1995
(51) Int. Cl.: B66F 9/20, F16M 11/12

(54) **Vorrichtung zur Anbringung eines Datenterminals an einem Flurförderzeug**

(30) Priorität: 15.12.1994 DE 4444770
(71) Anmelder: Wagner Fördertechnik GmbH & Co KG, 72760 Reutlingen (DE)
(72) Erfinder: Seng, Gert, Dipl.-Ing., D-72766 Reutlingen (DE); Jauch, Ingrid, D-72800 Eningen (DE)
(74) Vertreter: Kasseckert, Rainer

(57) **Zusammenfassung**

Eine Vorrichtung zur Anbringung eines Datenterminals an einem Flurförderzeug weist eine flurförderzeugseitige Aufnahmeöffnung (3) auf, in die ein Steckrohr (5) einer Halterung (6) einsetzbar ist, die zur Verbindung mit dem Datenterminal (13) ausgebildet ist. Die Aufnahmeöffnung (3) im Flurförderzeug und das Steckrohr (5) der Halterung (6) haben jeweils einen zylindrischen Querschnitt. Die Aufnahmeöffnung (3) ist in einer Zylinderbuchse (4) gebildet, die an einer Wand des Flurförderzeugs befestigt ist. Die Halterung (6) weist ein mit dem Steckrohr (5) verbundenes Tragrohr (7) mit elliptischem Querschnitt auf, dessen Mittelachse zur Mittelachse des Steckrohrs (5) vorzugsweise um 45 Grad geneigt ist. Das Steckrohr (5) ist in der Aufnahmeöffnung (3) drehbar. An das Tragrohr (7) schließt ein Gelenk (8) an, durch das die Neigung des Datenterminals (13) einstellbar ist. Innerhalb der Aufnahmeöffnung (3) ist eine Steckverbindung (12) zur Energieversorgung des Datenterminals (13) vorgesehen. Die Halterung (6) kann mit einer Funkantenne und/oder einer Infrarot-Empfangsanlage sowie mit Steckerausgängen für einen Drucker und/oder einen Scanner versehen sein.

## Beschreibung

Die Erfindung betrifft eine Vorrichtung zur Anbringung eines Datenterminals an einem Flurförderzeug.

Datenterminals werden für die Wareneingangsabwicklung, die Reserveplatzverwaltung, die Nachschubsteuerung, das beleglose Kommissionieren und die Staplersteuerung verwendet. In dem Artikel "Nachschubsteuerungen in Verbindung mit Standardisierungen" auf Seite 80 bis 81 der Zeitschrift "dynamik im handel 6/94" wird gefordert, einen Standort für die Ablage von Datenterminals auf Flurförderzeugen vorzusehen.

Die der vorliegenden Erfindung zugrundeliegene Aufgabe besteht darin, eine funktionssichere, kostengünstige und einfach herstellbare Vorrichtung der eingangs genannten Art zur Verfügung zu stellen.

Diese Aufgabe wird erfindungsgemäß dadurch gelöst, daß die Vorrichtung eine flurförderzeugseitige Aufnahmeöffnung aufweist, in die ein Steckrohr einer Halterung einsetzbar ist, die zur Verbindung mit dem Datenterminal ausgebildet ist.

Herstellungstechnisch ist es von Vorteil, wenn die Aufnahmeöffnung im Flurförderzeug und das Steckrohr der Halterung jeweils einen zylindrischen Querschnitt aufweisen.

Da der überwiegende Teil der Flächen am Flurförderzeug, die zur Anbringung einer Aufnahmeöffnung geeignet sind, aus Blech bestehen, ist gemäß einer Weiterbildung der Erfindung die Aufnahmeöffnung in einer Zylinderbuchse gebildet, die an einer Wand des Flurförderzeugs befestigt ist. Dadurch wird eine ausreichende Stabilität und Fixierung der Aufnahmeöffnung sowie der darin angeordneten Halterung und damit des Datenterminals erreicht.

Die Aufnahmeöffnung wird bevorzugt bereits bei der Herstellung des Flurförderzeugs mit eingearbeitet und dann zweckmäßigerweise mit einem Stopfen verschlossen. Falls dann später ein Einsatz des Flurförderzeugs im Zusammenhang mit einem Datenterminal beabsichtigt ist, wird der Stopfen entfernt und das Datenterminal, das zuvor mit der Halterung verbunden wurde, mit Hilfe der Halterung am Flurförderzeug befestigt.

Sofern das Flurförderzeug als deichselgelenktes Flurförderzeug ausgebildet ist, erweist es sich als zweckmäßig, die Zylinderbuchse an der Oberseite der Deichsel anzuordnen.

Um das Datenterminal in günstiger Sichtweite anzuordnen und eine zur ergonomisch einwandfreien Bedienung ausreichende Entfernung zu haben, wird vorgeschlagen daß die Halterung ein mit dem Steckrohr verbundenes Tragrohr aufweist, dessen Mittelachse zur Mittelachse des Steckrohrs geneigt ist.

Hierbei ist es günstig, wenn die Mittelachse des Tragrohrs unter einem Winkel von 45 Grad zur Mittelachse des Steckrohr geneigt ist.

Zur Erhöhung der Stabilität der Halterung wird vorgeschlagen, daß das Tragrohr einen elliptischen Querschnitt aufweist.

Um den Bedürfnissen des Bedieners entgegenzukommen ist es zweckmäßig, das Steckrohr in der Aufnahmeöffnung drehbar zu befestigen. Damit ist ein Schwenken der aus Datenterminal und Halterung bestehenden Baueinheit um 360 Grad möglich.

Zur Optimierung des Zugriffs des Bedieners zur Tastatur und um eine blendfreie Oberfläche der optischen Anzeige des Datenterminals zu erreichen, ist es von Vorteil, wenn die Halterung ein an das Tragrohr anschließendes Gelenk aufweist, durch das die Neigung des Datenterminals einstellbar ist.

Gemäß einer Weiterbildung der Erfindung wird die Einsatzdauer des Datenterminals dadurch erheblich verlängert, daß innerhalb der Aufnahmeöffnung eine Steckverbindung zur Energieversorgung des Datenterminals vorgesehen ist.

Besonders vorteilhaft ist es, wenn das Datenterminal eine Funkantenne aufweist, wobei die Funkantenne vorzugsweise innerhalb des Datenterminals integriert ist.

Nach einer vorteilhaften Ausgestaltung der Erfindung ist das Datenterminal mit Versorgungskabeln und/oder Steckeranschlüssen zur Energieversorgung und/oder Steckeranschlüssen für eine Infrarot-Empfangsanlage versehen. Es sind im Hinblick auf diese Empfangsanlage keine Eingriffe in das Datenterminal erforderlich.

Die Einsatzmöglichkeiten werden weiter verbessert, wenn das Datenterminal mit Versorgungskabeln und/oder Steckeranschlüssen für einen Drucker und/oder einen Scanner versehen ist.

Weitere Vorteile und Einzelheiten der Erfindung werden anhand des in den schematischen Figuren dargestellten Ausführungsbeispieles näher erläutert. Dabei zeigt
- Figur 1: eine perspektivische Ansicht der Deichsel eines deichselgelenkten Flurförderzeugs,
- Figur 2: einen Längsschnitt durch eine Zylinderbuchse,

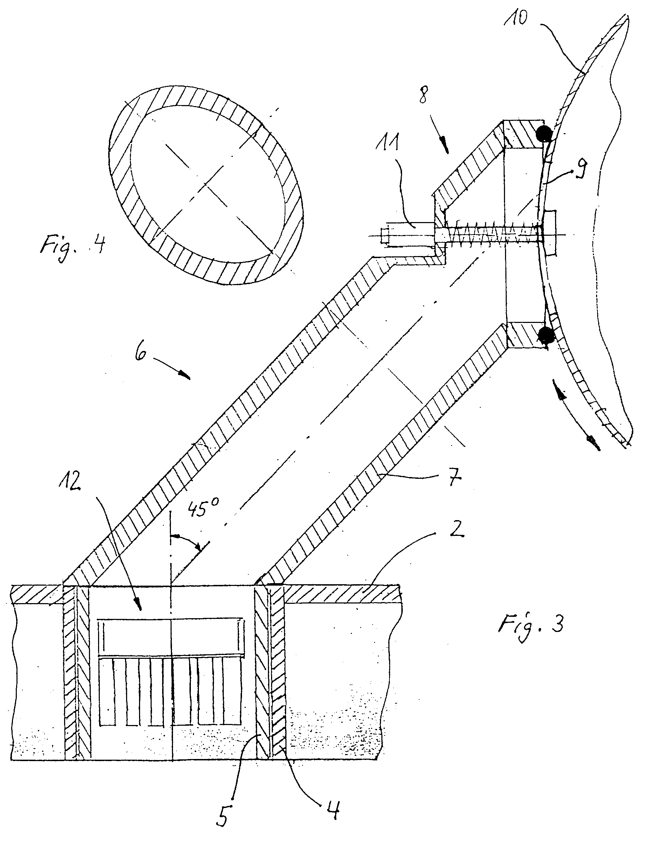

- Figur 3: einen Querschnitt durch eine Halterung für ein Datenterminal und
- Figur 4: einen Querschnitt durch das Tragrohr der Halterung.
- Figur 5: eine perspektivische Ansicht des Fahrerraums eines Sitz-Flurförderzeugs mit installiertem Datenterminal.

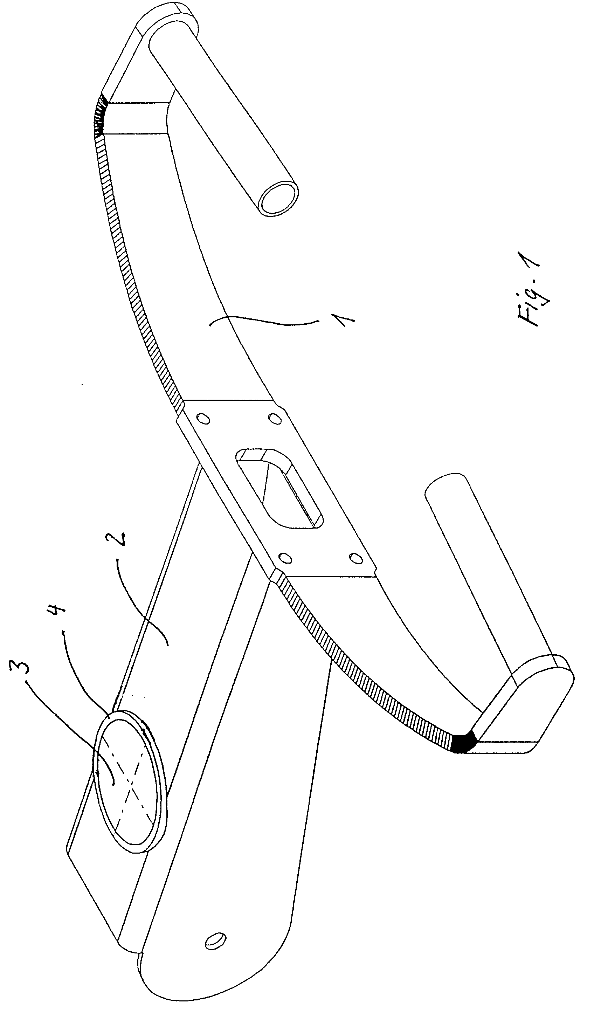

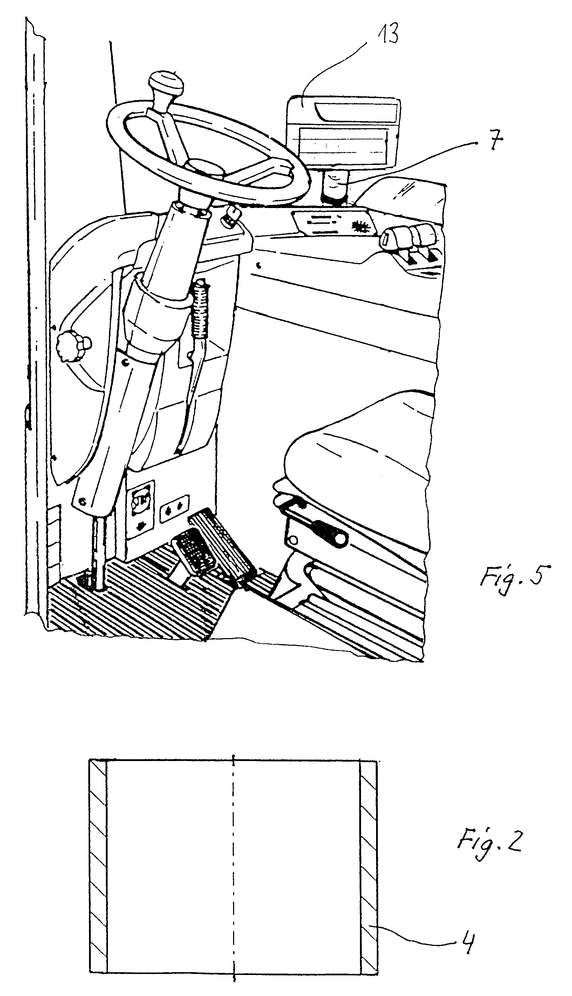

Die in Figur 1 dargestellte Deichsel eines deichselgelenkten Flurförderzeugs weist benachbart dem Deichselgriff 1 eine auf der Oberseite 2 der Deichsel angeordnete Aufnahmeöffnung 3 für die Halterung eines Datenterminals auf. Die Aufnahmeöffnung 3 ist in einer an der Wand (Oberseite 2) des Deichselkopfs befestigten, vorzugsweise eingeschweißten Zylinderbuchse 4 (siehe auch Figur 2) gebildet.

Die Zylinderbuchse 4 ist zur Aufnahme eines Steckrohrs 5 einer Halterung 6 vorgesehen. Das Steckrohr 5 ist innerhalb der Zylinderbuchse 4 drehbar. Ein Tragrohr 7 mit elliptischen Querschnitt ist mit dem Steckrohr 5 bevorzugt derart verbunden, daß die Mittelachse des Tragrohrs 7 um 45 Grad zur Mittelachse des Steckrohrs 5 geneigt ist. Selbstverständlich ist es ebenfalls möglich, das Steckrohr 5 mit einer anderen, z. B. rechteckigen, Querschnittsform auszuführen.

An der dem Steckrohr entgegengesetzten Seite des Tragrohrs 7 ist eine Gelenk 8 angeordnet. Das Gelenk 8 weist beispielsweise eine Längsnut 9 in einem das Datenterminal aufnehmenden Gehäuse 10 auf und eine damit zusammenwirkende Verschraubung 11. Nach Lösen der Verschraubung 11 kann die Neigung des Gehäuses 10 und des daran beispielsweise festgeschraubten Datenterminals verstellt und durch Anziehen der Verschraubung 11 fixiert werden.

Im Bereich der Aufnahmeöffnung 3 befindet sich eine Steckverbindung 12, die aus einer vorzugsweise dem Flurförderzeug zugeordneten Buchse und einem der Halterung zugeordneten Stecker besteht und der Energieversorgung des Datenterminals dient und zusätzlich mit und/oder einer Infrarot-Empfangsanlage sowie mit Steckeranschlüssen für die Energieversorgung sowie für einen Drucker und/oder einen Scanner versehen sein (in den Figuren nicht dargestellt).

Das in Figur 5 gezeigte Flurförderzeug stellt ein Sitz-Flurförderzeug dar, auf dem ein Datenterminal 13, in dessen Gehäuse eine Funkantenne integriert ist, in der erfindungsgemäßen Art und Weise installiert ist. Der nachträgliche Einbau des Datenterminals 13 ist denkbar einfach: Buchse und Stecker zusammenclipsen, Halterung mit dem Datenterminal in die Aufnahmeöffnung stecken, fertig.

## Patentansprüche

1. Vorrichtung zur Anbringung eines Datenterminals an einem Flurförderzeug, **dadurch gekennzeichnet**, daß die Vorrichtung eine flurförderzeugseitige Aufnahmeöffnung (3) aufweist, in die ein Steckrohr (5) einer Halterung (6) einsetzbar ist, die zur Verbindung mit dem Datenterminal (13) ausgebildet ist.

2. Vorrichtung nach Anspruch 1, dadurch gekennzeichnet, daß die Aufnahmeöffnung (3) im Flurförderzeug und das Steckrohr (5) der Halterung (6) jeweils einen zylindrischen Querschnitt aufweisen.

3. Vorrichtung nach Anspruch 2, dadurch gekennzeichnet, daß die Aufnahmeöffnung (3) in einer Zylinderbuchse (4) gebildet ist, die in eine Wand des Flurförderzeugs eingeschweißt ist.

4. Vorrichtung nach Anspruch 3, wobei das Flurförderzeug als deichselgelenktes Flurförderzeug ausgebildet ist, dadurch gekennzeichnet, daß die Zylinderbuchse (4) an der Oberseite (2) der Deichsel angeordnet ist.

5. Vorrichtung nach einem der Ansprüche 1 bis 4, dadurch gekennzeichnet, daß die Halterung (6) ein mit dem Steckrohr (5) verbundenes Tragrohr (7) aufweist, dessen Mittelachse zur Mittelachse des Steckrohrs (5) geneigt ist.

6. Vorrichtung nach Anspruch 5, dadurch gekennzeichnet, daß die Mittelachse des Tragrohrs (7) unter einem Winkel von 45 Grad zur Mittelachse des Steckrohrs (5) geneigt ist.

7. Vorrichtung nach Anspruch 5 oder 6, dadurch gekennzeichnet, daß das Tragrohr (7) einen elliptischen Querschnitt aufweist.

8. Vorrichtung nach einem der Ansprüche 1 bis 7, dadurch gekennzeichnet, daß das Steckrohr (5) in der Aufnahmeöffnung (3) drehbar ist.

9. Vorrichtung nach einem der Ansprüche 1 bis 8, dadurch gekennzeichnet, daß die Halterung (6) ein an das Tragrohr (7) anschließendes Gelenk (8) aufweist, durch das die Neigung des Datenterminals (13) einstellbar ist.

10. Vorrichtung nach einem der Ansprüche 1 bis 9, dadurch gekennzeichnet, daß innerhalb der Aufnahmeöffnung (3) eine Steckverbindung (12) zur Energieversorgung des Datenterminals (13) vorgesehen ist.

11. Vorrichtung nach einem der Ansprüche 1 bis 10, dadurch gekennzeichnet, daß das Datenterminal (13) eine Funkantenne aufweist, wobei die Funkantenne vorzugsweise innerhalb des Datenterminals (13) integriert ist.

12. Vorrichtung nach einem der Ansprüche 1 bis 11, dadurch gekennzeichnet, daß das Datenterminal mit Versorgungskabeln und/oder Steckeranschlüssen zur Energieversorgung und/oder Steckeranschlüssen für eine Infrarot-Empfangsanlage versehen ist.

13. Vorrichtung nach einem der Ansprüche 1 bis 12, dadurch gekennzeichnet, daß die Halterung (6) mit Steckerausgängen für einen Drucker und/oder einen Scanner versehen ist.
